# EUROPÄISCHE PATENTANMELDUNG

(11) **EP 1 624 232 A1**
(43) Veröffentlichungstag der Anmeldung: **08.02.2006**
(21) Anmeldenummer: 05450104.4
(22) Anmeldetag: 10.06.2005
(51) Int. Cl.: F16H 63/44, F16H 37/04

(54) **Doppelkupplungsgetriebe für ein Arbeitskraftfahrzeug**

(30) Priorität: 03.08.2004 AT 13262004
(71) Anmelder: hofer forschungs- und entwicklungs GmbH & Co KG, 4400 Steyr (AT)
(72) Erfinder: Aitzetmüller, Heinz, 4817 St. Konrad (AT); Flachs, Reinhard, 4073 Wilhering (AT); Hofer, Johann Paul, 97447 Gerolzhofen (DE); Hofer, Markus, 4451 Garsten (AT); Stöckl, Dieter, 4400 Steyr (AT)
(74) Vertreter: Hübscher, Helmut

(57) **Zusammenfassung**

Es wird ein Doppelkupplungsgetriebe für ein Arbeitskraftfahrzeug mit einer eingangsseitigen Verteilerstufe (3) zum Antrieb zweier Vorgelegewellen (1, 2) über je eine schaltbare Reibkupplung (7, 8) und mit abwechselnd zwischen einer gemeinsamen Ausgangswelle (16) einerseits und den beiden Vorgelegewellen (1, 2) anderseits vorgesehenen, den einzelnen Gängen zugeordneten Getriebestufen (9, 10, 11, 12) beschreiben, die je ein über eine Synchronisiereinrichtung (13) schaltbares Losrad (14) auf einer der Vorgelegewellen (1, 2) und ein mit dem Losrad (14) kämmendes Stirnrad (15) auf der gemeinsamen Ausgangswelle (16) besitzen. Um die Gangabstufung bei einer vorgegeben Gesamtspreizung zu verfeinern, wird vorgeschlagen, daß zwischen der Ausgangswelle (16) und einer Abtriebswelle (18) ein Nachschaltgetriebe (17) mit einer Schalteinrichtung (19) angeordnet ist und daß die Reibkupplungen (7, 8) der Vorgelegewellen (1, 2) zum Schalten des Nachschaltgetriebes (17) in Abhängigkeit von der Schaltstellung der Schalteinrichtung (19) über eine Steuereinrichtung (24) ansteuerbar sind.

## Beschreibung

Die Erfindung bezieht sich auf ein Doppelkupplungsgetriebe für ein Arbeitskraftfahrzeug mit einer eingangsseitigen Verteilerstufe zum Antrieb zweier Vorgelegewellen über je eine schaltbare Reibkupplung und mit abwechselnd zwischen einer gemeinsamen Ausgangswelle einerseits und den beiden Vorgelegewellen anderseits vorgesehenen, den einzelnen Gängen zugeordneten Getriebestufen, die je ein über eine Synchronisiereinrichtung schaltbares Losrad auf einer der Vorgelegewellen und ein mit dem Losrad kämmendes Stirnrad auf der gemeinsamen Ausgangswelle besitzen.

Um die Antriebsverbindung zwischen dem Motor und den Antriebsrädern eines Kraftfahrzeuges beim Schalten zwischen den einzelnen Gängen nicht unterbrechen zu müssen, ist es bekannt (DE 199 39 334 A1) ein Doppelkupplungsgetriebe vorzusehen, das zwei Vorgelegewellen aufweist, die über je eine schaltbare Reibungskupplung von einer eingangsseitigen Verteilerstufe mit gleicher Drehzahl angetrieben werden. Zwischen diesen Vorgelegewellen und einer gemeinsamen Abtriebswelle sind den einzelnen Gängen zugeordnete Getriebestufen vorgesehen, die je ein über eine Synchronisiereinrichtung schaltbares Losrad auf einer der Vorgelegewellen und ein mit diesem Losrad kämmendes Stirnrad auf der gemeinsamen Abtriebswelle aufweisen. Die Anordnung ist dabei so getroffen, daß die den aufeinanderfolgenden Gängen zugeordneten Getriebestufen abwechselnd je einer der beiden Vorgelegewellen zugeordnet sind, so daß beim Schalten von einem Gang auf den nächsten die dem nächsten Gang zugehörige, von der Abtriebswelle angetriebene Getriebestufe bei geöffneter Reibkupplung der zugehörigen Vorgelegewelle über die Synchronisiereinrichtung mit der Vorgelegewelle verbunden werden kann, bevor die Reibkupplung geschlossen und zugleich die Reibkupplung der anderen Vorgelegewelle geöffnet wird, um ohne Unterbrechung der Antriebsverbindung durch ein wechselseitiges Betätigen der den Vorgelegewellen zugeordneten, unter Last schaltbaren Reibkupplungen das Drehmoment der Antriebswelle von der einen Vorgelegewelle auf die andere zu übertragen. Obwohl durch die Anordnung zweier Vorgelegewellen mehrere je einem Gang zugeordnete Getriebestufen mit einem vergleichsweise einfachen Konstruktionsaufwand vorgesehen werden können, bleiben die Übersetzungsverhältnisse zwischen den einzelnen Gängen bei einer im allgemeinen geforderten Gesamtspreizung des Getriebes für Arbeitskraftfahrzeuge häufig unzureichend, wie sie beispielsweise auf dem Gebiet der Landmaschinen oder der Baumaschinen zum Einsatz kommen.

Um bei einer vorgegebenen Gesamtspreizung eine feinere Abstufung der Gangstufen zu erreichen, ist es bekannt (DE 198 14 569 A1), dem Hauptgetriebe ein Nachschaltgetriebe zuzuordnen, so daß je nach der Schaltstellung des Nachschaltgetriebes die Gangstufen des Hauptgetriebes eine weitere Übersetzung mit einem für alle Gangstufen einheitlichen Übersetzungsverhältnis erfahren. Die für das Schalten des Nachschaltgetriebes erforderliche Synchronisation wird über ein- und ausgangseitige Reibkupplungen des Nachschaltgetriebes sichergestellt. Solche zusätzliche Reibkupplungen erhöhen allerdings den Konstruktionsaufwand.

Der Erfindung liegt somit die Aufgabe zugrunde, ein Doppelkupplungsgetriebe der eingangs geschilderten Art für ein Arbeitskraftfahrzeug so auszugestalten, daß bei einer entsprechenden Gesamtspreizung eine vorteilhafte Gangabstufung mit einem vergleichsweise geringen Konstruktionsaufwand ermöglicht wird.

Die Erfindung löst die gestellte Aufgabe dadurch, daß zwischen der Ausgangswelle und einer Abtriebswelle ein Nachschaltgetriebe mit einer Schalteinrichtung angeordnet ist und daß die Reibkupplungen der Vorgelegewellen zum Schalten des Nachschaltgetriebes in Abhängigkeit von der Schaltstellung der Schalteinrichtung über eine Steuereinrichtung ansteuerbar sind.

Zufolge dieser Maßnahmen wird es möglich, ein Doppelkupplungsgetriebe zur feinstufigen Unterteilung der geforderten Gesamtspreizung mit einem Nachschaltgetriebe zu verbinden, ohne gesonderte Reibkupplungen oder - bremsen für die Synchronisiereinrichtung des Nachschaltgetriebes vorsehen oder eine Überlastung dieser Synchronisiereinrichtung befürchten zu müssen. Zur Anpassung der Drehzahl der Ausgangswelle des Doppelkupplungsgetriebes an die Drehzahl der Abtriebswelle des Nachschaltgetriebes unter Berücksichtigung des jeweiligen Übersetzungsverhältnisses können nämlich vorteilhaft die schaltbaren Reibkupplungen des Doppelkupplungsgetriebes genützt werden. Zum Schalten des Nachschaltgetriebes wird zunächst die Antriebsverbindung zwischen der Abtriebswelle des Nachschaltgetriebes und der Ausgangswelle des Doppelkupplungsgetriebes über die Synchronisiereinrichtung des Nachschaltgetriebes unterbrochen. Außerdem werden die Reibkupplungen des Doppelkupplungsgetriebes geöffnet, um über die Reibkupplung der Vorgelegewelle mit der jeweils geschalteten Getriebestufe die Ausgangswelle des Doppelkupplungsgetriebes auf eine bezüglich des Nachschaltgetriebes synchrone Drehzahl zu beschleunigen oder zu bremsen, wobei durch eine Steuerung der Motordrehzahl dieser Synchronisiervorgang unterstützt werden kann. Vor dem Schalten des Nachschaltgetriebes ist die Reibkupplung der zum Einsatz kommenden Vorgelegewelle wieder zu öffnen, so daß beim nachfolgenden Schalten des Nachschaltgetriebes die Belastung seiner Schalteinrichtung vergleichsweise klein gehalten werden kann. Mit dem neuerlichen Schließen der Reibkupplung der zum Einsatz kommenden Vorgelegewelle des Doppelkupplungsgetriebes ist der Schalt- und Synchronisiervorgang abgeschlossen. Kann die Synchronisierung der Ausgangswelle des Doppelkupplungsgetriebes hinsichtlich der Drehzahl der Abtriebswelle des Nachschaltgetriebes über die Reibkupplungen des Doppelkupplungsgetriebes ausreichend genau durchgeführt werden, so kann für die Schalteinrichtung des Nachschaltgetriebes eine Synchronisiereinrichtung entfallen.

Entspricht das Übersetzungsverhältnis des Nachschaltgetriebes angenähert dem zwischen der jeweils niedrigsten und höchsten Gangstufe der beiden Vorgelegewellen des Doppelkupplungsgetriebes, so ergeben sich besonders vorteilhafte Schaltvoraussetzungen, weil zunächst alle Gänge des Doppelkupplungsgetriebes in der einen Schaltstellung des Nachschaltgetriebes durchlaufen werden, bevor diese Gänge in der anderen Schaltstellung des Nachschaltgetriebes noch einmal betätigt werden. Obwohl aufgrund einer entsprechenden Gesamtspreizung die Vorgelegewellen bei der jeweils höchsten Gangstufe einen Drehzahlbereich aufweisen können, der mit dem Drehzahlbereich der Vorgelegewellen in der jeweils niedrigsten Gangstufe nach dem Schalten des Nachschaltgetriebes entspricht, empfiehlt es sich, zum Schalten des Nachschaltgetriebes zwischen zwei Gangstufen auf unterschiedlichen Vorgelegewellen zu wechseln. Ein solcher Wechsel der Vorgelegewellen zum Schalten des Nachschaltgetriebes sichert nämlich nicht nur eine kürzere Unterbrechung des Antriebstranges, sondern vereinfacht auch die Synchronisation der nach dem Schalten des Nachschaltgetriebes zum Einsatz kommenden Gangstufe, weil diese Gangstufe der vor dem Schalten des Nachschaltgetriebes nicht angetriebenen Vorgelegewelle zugehört und daher ohne Unterbrechung des Antriebstranges auf die jeweils für die zu schaltende Gangstufe erforderliche, synchrone Drehzahl angetrieben werden kann, bevor nach einem Öffnen der Reibkupplung für die bisher angetriebene Vorgelegewelle und einem Unterbrechen der Antriebsverbindung zur Abtriebswelle des Nachschaltgetriebes durch dessen Schalteinrichtung die Gangstufe tatsächlich geschaltet wird, um dann über die Reibkupplung der Vorgelegewelle mit der geschalteten Gangstufe die Synchronisation für die Schalteinrichtung des Nachschaltgetriebes zumindest weitgehend vorzunehmen.

Um den konstruktiven Aufwand zu verringern, können schließlich die Getriebestufen der beiden über die Verteilerstufe mit einem unterschiedlichen Übersetzungsverhältnis antreibbaren Vorgelegewellen paarweise gleich sein und je ein gemeinsames Stirnrad auf der Ausgangswelle aufweisen. In diesem Fall erfolgt der Antrieb der paarweise gleichen Getriebestufen über die in einem vorgegebenen Übersetzungsverhältnis angetriebenen Vorgelegewellen, was zwischen den jeweils gleichen Getriebestufen zugeordneten Gängen ein Übersetzungsverhältnis entsprechend dem zwischen den beiden Vorgelegewellen bedingt. Wird zusätzlich das Übersetzungsverhältnis zwischen zwei hinsichtlich der zugeordneten Gänge unmittelbar aufeinanderfolgenden Paaren gleicher Getriebestufen in Abhängigkeit von den darstellbaren Zähnezahlen entsprechend dem Quadrat des Übersetzungsverhältnisses zwischen den beiden Vorgelegewellen gewählt, so ergibt sich eine gleichmäßige Getriebeabstufung zwischen den unter Last schaltbaren Gängen, was den Antriebsbedingungen bei Arbeitskraftfahrzeugen entgegenkommt. Beim Hochschalten soll ja die Motordrehzahl nur soweit zurückgenommen werden, daß für die Beschieunigung im nächsthöheren Gang ein ausreichendes Drehmoment zur Verfügung steht.

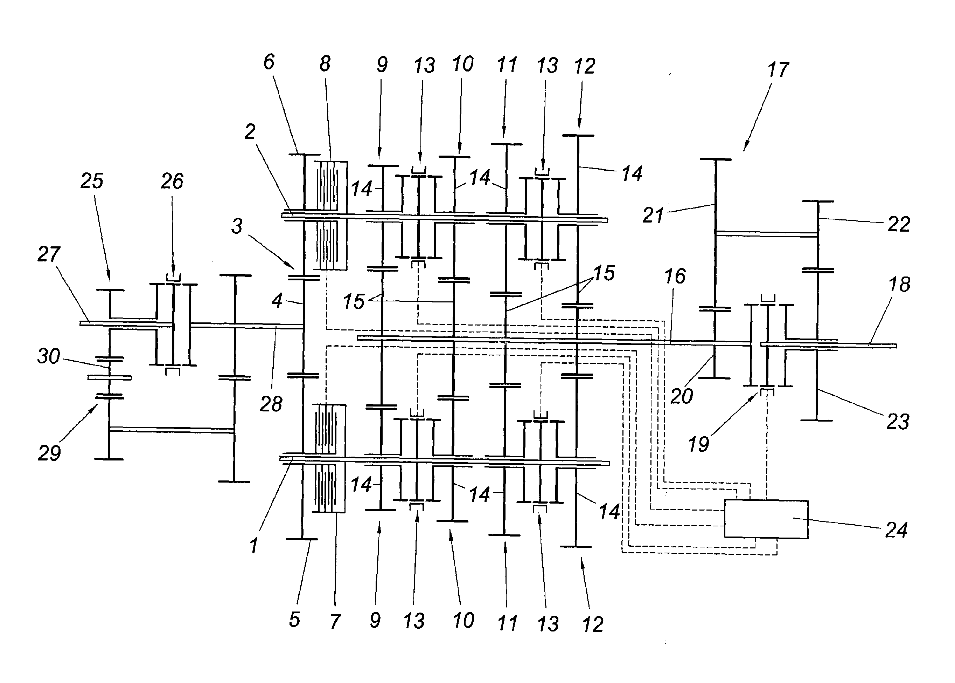

In der Zeichnung ist der Erfindungsgegenstand beispielsweise dargestellt, und zwar wird ein erfindungsgemäßes Doppelkupplungsgetriebe für ein Arbeitskraftfahrzeug in einem schematischen Blockschaltbild gezeigt.

Das dargestellte Doppelkupplungsgetriebe für ein Arbeitskraftfahrzeug weist zwei Vorgelegewellen 1, 2 auf, die über einer Verteilerstufe 3 mit unterschiedlicher Drehzahl angetrieben werden. Zu diesem Zweck kämmt ein eingangsseitiges Stirnrad 4 mit zwei Stirnrädern 5 und 6, die eine unterschiedliche Anzahl von Zähnen aufweisen. Die Stirnräder 5, 6 sind über unter Last schaltbare Reibkupplungen 7, 8 mit den zugehörigen Vorgelegewellen 1, 2 verbunden, denen jeweils paarweise gleiche Getriebestufen 9, 10, 11 und 12 zugeordnet sind. Diese Getriebestufen 9, 10, 11, und 12 sind jeweils aus einem über eine Synchronisiereinrichtung 13 schaltbaren Losrad 14 auf den zugehörigen Vorgelegewellen 1, 2 und aus einem Stirnrad 15 aufgebaut. Die Anordnung ist dabei so getroffen, daß sich die paarweise gleichen Getriebestufen 9, 10, 11 und 12 der beiden Vorgelegewellen 1 und 2 einander bezüglich einer Ausgangswelle 16 gegenüberliegen und daher jeweils nur ein gemeinsames Stirnrad 15 benötigen.

An die Ausgangswelle 16 des Doppelkupplungsgetriebes ist ein Nachschaltgetriebe 17 angeschlossen, dessen Abtriebswelle mit 18 bezeichnet ist. Dieses Nachschaltgetriebe 17 kann über eine Schalteinrichtung 19 geschaltet werden, die die Ausgangswelle 16 des Doppelkupplungsgetriebes entweder unmittelbar oder über das Nachschaltgetriebe 17 mit der Abtriebswelle 18 verbindet. Das Nachschaltgetriebe weist zwei Getriebestufen mit jeweils einem Zahnradpaar 20, 21 bzw. 22, 23 auf, wobei gemäß dem dargestellten Ausführungsbeispiel das mit dem Stirnrad 21 kämmende Stirnrad 20 drehfest mit der Ausgangswelle 16 verbunden ist, während das auf einer gemeinsamen Welle mit dem Stirnrad 21 sitzende Stirnrad 22 mit dem ats Losrad ausgebildeten Stirnrad 23 in Eingriff steht. Wird über die Schalteinrichtung 19 das Losrad 23 mit der Abtriebswelle 18 gekuppelt, so wird die Abtriebswelle 18 entsprechend dem Übersetzungsverhältnis des Nachschaltgetriebes 17 mit einer gegenüber der Ausgangswelle 16 niedrigeren Drehzahl angetrieben. Das Übersetzungsverhältnis des Nachschaltgetriebes 17 ist dabei an das Übersetzungsverhältnis zwischen der jeweils niedrigsten und höchsten Gangstufe der beiden Vorgelegewellen 1, 2 des Doppelkupplungsgetriebes angepaßt, so daß beim Hochschalten durch ein Schalten des Nachschaltgetriebes 17 vom höchsten, durch die Gangstufe 12 der Vorgelegewelle 2 bestimmten Gang des Doppelkupplungsgetriebes auf die niedrigste Gangstufe 9 oder die nächste Gangstufe 10 der anderen Vorgelegewelle 1 umgeschaltet werden kann.

Zu diesem Zweck wird zunächst die nicht unter Last stehende Vorgelegewelle 1 durch eine Ansteuerung der Synchronisiereinrichtung 13 über eine Steuereinrichtung 24 auf eine für den zu schaltenden Gang der Gangstufe 9 bzw. 10 synchrone Drehzahl angetrieben, bevor die Reibkupplung 8 geöffnet wird, um die Gangstufe 12 der Vorgelegewelle 2 auszurücken und die Gangstufe 9 bzw. 10 der Vorgelegewelle 1 zu schalten. Die Betätigung der Synchronisiereinrichtungen 13 für die Getriebestufen 12 und 9 bzw. 10 kann dabei wiederum über die Steuereinrichtung 24 gesteuert werden. Da gleichzeitig die Antriebsverbindung zwischen den Wellen 16 und 18 über die Schalteinrichtung 19 unterbrochen wird, und zwar über die Steuereinrichtung 24, kann durch ein neuerliches Ansteuern der Reibkupplung 7 die Drehzahl der Ausgangswelle 16 an die der Abtriebswelle 18 angeglichen werden, wobei die Drehzahl der Vorgelegewelle 1 in Abhängigkeit von der Motordrehzahl verzögert oder beschleunigt werden kann. Sind die Drehzahlen der Ausgangswelle 16 und der Abtriebswelle 18 ausreichend synchronisiert, so wird die Abtriebswelle 18 über die Schalteinrichtung 19 und die zugehörige Synchronisiereinrichtung unmittelbar mit der Ausgangswelle 16 gekuppelt, wobei jedoch zur Vermeidung einer Überlastung der Schalteinrichtung 19 die Reibkupplung 7 wieder gelöst werden kann. Bei einer ausreichend genauen Steuerung des Antriebsmotors und der Schalt- und Synchronisiereinrichtungen kann die Schalteinrichtung 19 als Klauenkupplung ausgeführt werden. Nach dem Schalten der Schalteinrichtung 19 zur unmittelbaren Antriebsverbindung der Wellen 16 und 18 wird die Reibkupplung 7 wieder eingerückt, wodurch der Vorgang zum Umschalten des Nachschaltgetriebes 17 beendet ist.

Beim Schalten des Nachschaltgetriebes 17 vom höheren auf den niedrigeren Drehzahlbereich wird im wesentlichen analog vorgegangen, wobei jedoch beispielsweise von der niedrigsten Gangstufe der Vorgelegewelle 1, also von der Getriebestufe 9 auf die der Vorgelegewelle 2 zugehörige Getriebestufe 11 oder 12 umgeschaltet wird.

Der Verteilerstufe 3 kann gemäß dem dargestellten Ausführungsbeispiel ein Umkehrgetriebe 25 vorgelagert werden, das über einer Synchronisiereinrichtung 26 geschaltet wird, um die Verteilerstufe 3 in der einen oder anderen Richtung anzutreiben, was einen Fahrrichtungswechsel für das Arbeitskraftfahrzeug bedeutet. Wird die Antriebswelle 27 über die Synchronisiereinrichtung 26 mit der Eingangswelle 28 der Verteilerstufe 3 unmittelbar verbunden, so erfolgt der Fahrzeugantrieb in einer Fahrrichtung. Bei einer Antriebsverbindung der Antriebswelle 27 und der Eingangswelle 28 über die Umkehrstufe 29 des Umkehrgetriebes 25 ergibt sich wegen des vorgesehenen Zwischenrades 30 eine Drehrichtungsumkehr.

## Patentansprüche

1. Doppelkupplungsgetriebe für ein Arbeitskraftfahrzeug mit einer eingangsseitigen Verteilerstufe zum Antrieb zweier Vorgelegewellen über je eine schaltbare Reibkupplung und mit abwechselnd zwischen einer gemeinsamen Ausgangswelle einerseits und den beiden Vorgelegewellen anderseits vorgesehenen, den einzelnen Gängen zugeordneten Getriebestufen, die je ein über eine Synchronisiereinrichtung schaltbares Losrad auf einer der Vorgelegewellen und ein mit dem Losrad kämmendes Stirnrad auf der gemeinsamen Ausgangswelle besitzen, **dadurch gekennzeichnet, daß** zwischen der Ausgangswelle (16) und einer Abtriebswelle (18) ein Nachschaltgetriebe (17) mit einer Schalteinrichtung (19) angeordnet ist und daß die Reibkupplungen (7, 8) der Vorgelegewellen (1, 2) zum Schalten des Nachschaltgetriebes (17) in Abhängigkeit von der Schaltstellung der Schalteinrichtung (19) über eine Steuereinrichtung (24) ansteuerbar sind.

2. Doppelkupplungsgetriebe nach Anspruch 1, **dadurch gekennzeichnet, daß** das Übersetzungsverhältnis des Nachschaltgetriebes (17) angenähert dem zwischen der jeweils niedrigsten und höchsten Gangstufe (9 bzw. 12) der beiden Vorgelegewellen (1, 2) des Doppelkupplungsgetriebes entspricht.

3. Doppelkupplungsgetriebe nach Anspruch 1 oder 2, **dadurch gekennzeichnet, daß** die Getriebestufen (9, 10, 11, 12) der beiden über die Verteilerstufe (3) mit einem unterschiedlichen Übersetzungsverhältnis antreibbaren Vorgelegewellen (1, 2) paarweise gleich sind und je ein gemeinsames Stirnrad (15) auf der Ausgangswelle (16) aufweisen.
